# EUROPÄISCHE PATENTSCHRIFT

(11) **EP 1 024 085 B1**
(45) Veröffentlichungstag und Bekanntmachung des Hinweises auf die Patenterteilung: **02.06.2004**
(21) Anmeldenummer: 00810039.8
(22) Anmeldetag: 19.01.2000
(51) Int. Cl.: B65B 51/26, B29C 65/14

(54) **Vorrichtung zum Versiegeln von Folien, insbesondere zum Versiegeln von Verpackungsfolien in einer Verpackungsmaschine**
Apparatus for sealing sheets, especially for sealing packaging sheets in a packaging machine
Dispositif pour souder des feuilles, en particulier pour souder des feuilles d'emballage dans une machine d'emballage

(30) Priorität: 29.01.1999 CH 16199
(43) Veröffentlichungstag der Anmeldung: 02.08.2000
(73) Patentinhaber: SIG Pack Systems AG, 8222 Beringen (CH)
(72) Erfinder: Nettesheim, Stefan, 8006 Zürich (CH)
(74) Vertreter: Clerc, Natalia

(56) Entgegenhaltungen:
- EP-A- 0 228 719
- EP-A- 0 517 929
- WO-A-89/10832
- DE-A- 1 604 607
- DE-A- 19 653 364
- DE-C- 845 564
- DE-C- 938 499
- GB-A- 2 103 147
- US-A- 2 249 470
- US-A- 3 384 526
- US-A- 3 472 721
- US-A- 3 655 473
- US-A- 3 860 853
- US-A- 4 192 700

## Beschreibung

Bei Schlauchbeutel-Verpackungsmaschinen werden vielfach Siegelbacken und Gegenbacken zum Herstellen der Siegelnähte eingesetzt. Entweder nur die Siegelbacke oder beide Backen werden auf eine Temperatur oberhalb der Schmelztemperatur der zu versiegelnden thermoplastischen Verpackungsfolien erhitzt. Die Backen werden bei der Versiegelung gegeneinandergepresst.

Die Produktivität dieser Systeme ist prinzipbedingt beschränkt. Die Wärmeleitung erfolgt durch die Folie hindurch bis in die Siegelzone. Ist die Siegeltemperatur zu gering, wird nicht genügend Wärme in die Siegelschicht übertragen. Bei zu heissen Siegelwerkzeugen neigt die Folie dazu, an den Kontaktflächen haftenzubleiben. Je nach Foliendicke und Arbeitstakt kann der Parameterbereich, in welchem eine zuverlässige Funktion garantiert ist, sehr eng sein. Bei rotierenden Quersiegelbacken hängt die Siegelzeit von der Vorschubgeschwindigkeit ab. Bei hoher Vorschubgeschwindigkeit wird die Siegelzeit zu kurz, um eine stabile Naht zu erzeugen. Diese Grenzgeschwindigkeit kann erhöht werden, indem die Quersiegelbacke auf einer Trajektorie mit geradem Wegverlauf über eine bestimmte Länge im Gleichlauf mit den Folien mitläuft (siehe zum Beispiel WO 96/17720). Hierzu benötigt man eine komplexe Mechanik, die oft zu Vibrationen, Verschleiss und Betriebsausfällen führen kann.

Allgemein ist die Siegelnaht eines Thermoplasten erst dann belastbar, wenn die Temperatur unter die Schmelztemperatur gefallen ist. Da durch den Kontakt mit den heissen Siegelwerkzeugen das gesamte Nahtvolumen erhitzt wird, begrenzt nebst der Geschwindigkeit des Energieeintrags auch die Abkühlphase die minimal erforderliche Zeit bis eine belastbare Naht ausgebildet ist.

WO 89/10832 offenbart eine Siegelvorrichtung für Verpackungsfolien, bei welcher die Energiequelle eine Infrarotlampe ist. Die Infrarotlampe ist innerhalb eines Reflektors angeordnet, welcher das Licht auf die Folie fokussiert. Der Reflektor ist mit einem transparenten Fenster versehen, welches mit der Folie kontaktierbar ist. Als Gegenhalter wird eine infrarotlichtabsorbierende, thermisch isolierende Oberfläche oder eine transparente oder spiegelnde Oberfläche verwendet.

US-A-3'384'526 offenbart eine Vorrichtung zum Versigeln von Folien, bei welcher eine Lichtquelle im Brennpunkt eines Reflektors angeordnet ist. Dadurch wird ein transparentes Fenster gleichmässig bestrahlt. Der Gegenhalter, welcher als Wärmesenke ausgebildet ist, wird dadurch gleichmässig erwärmt und überträgt die Wärme der zwischen Fenster und Gegenhalter angeordnete Folie, um sie zu verschweissen.

Der vorliegenden Erfindung liegt die Aufgabe zugrunde, eine Vorrichtung anzugeben, mit welcher eine rasche Versiegelung durchgeführt werden kann und die einfach im Aufbau ist. Diese Aufgabe wird durch die Merkmale des Anspruchs 1 gelöst.

Nachfolgend werden Ausführungsbeispiele der Erfindung anhand der Zeichnung erläutert. Darin zeigt:
Figuren 1 und 2 eine erste Ausführungsform in Längs- und Querschnitt,
Figuren 3 und 4 zwei weitere Ausführungsformen,
Figur 5 eine Ausführung mit modifiziertem Reflektor, und
Figur 6 Materialvarianten der zu versiegelnden Folien.

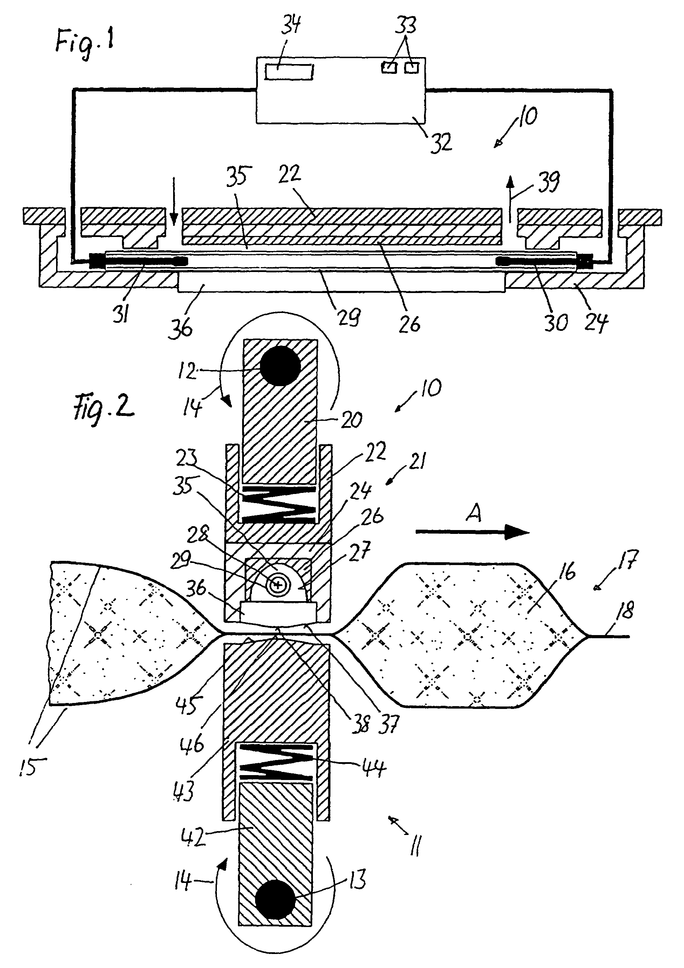

Die Vorrichtung nach Figuren 1 und 2 umfasst eine Siegeleinrichtung 10 und einen Gegenhalter 11, die um zwei beabstandete Achsen 12, 13 gegenläufig synchron in Pfeilrichtung 14 drehbar sind. Zwischen der Einrichtung 10 und dem Halter 11 wird der Verpackungsschlauch 15 in Förderrichtung A gefördert, der in regelmässigen Abständen die zu verpackenden Produkte 16 enthält. Der Schlauch 15 besteht aus einer Thermoplastfolie 18 und hat eine nicht dargestellte Längssiegelnaht. Durch Quertrennung längs der Mitte der mit der Vorrichtung gebildeten Quersiegelnähte werden Einzelpackungen 17 gebildet.

Die Einrichtung 10 umfasst einen um die Achse 12 drehbar angetriebenen, im Querschnitt rechteckigen Rotor 20 und eine optische Einheit 21. Die Einheit 21 umfasst einen Träger 22, der auf dem Rotor 20 radial verschiebbar geführt und durch eine Feder 23 radial nach aussen gegen einen nicht dargestellten Anschlag vorbelastet ist. Am Träger 22 ist ein prismatisches Gehäuse 24 aus einem Isolator, zum Beispiel aus Kunststoff befestigt. Im Gehäuse 24 ist ein Reflektor 26 aus Aluminium befestigt. Dessen reflektierende Oberfläche 27 ist zylindrisch und im Querschnitt eliptisch. Koaxial zu der zur Achse 12 parallelen Brennachse 28 der Oberfläche 27 ist eine zylindrische Gasentladungs-Blitzlampe, zum Beispiel eine Xenon-Blitzlampe, angeordnet. Die beiden Elektroden 30, 31 der Lampe 29 sind an einen Hochspannungs-Pulsgenerator 32 angeschlossen. Der Generator 32 hat einen Kondensator-Schaltkreis, Einstellelemente 33 zum Einstellen der Parameter wie Spannung, Stromstärke, Pulsdauer und allenfalls Pulsform, sowie Anzeigeelemente 34 zum Anzeigen der eingestellten Parameter. Der Hohlraum 35 zwischen der Lampe 29 und dem Reflektor 26 ist durch ein transpartentes Fenster 36 abgeschlossen. Die etwa zylindrisch bombierte Aussenfläche 37 des Fensters 36 hat in der Mitte eine Abflachung 38, die senkrecht zur gemeinsamen Ebene der Achsen 12, 28 verläuft. Der Raum 35 ist an einen Kühlmittelkreislauf 39 angeschlossen. Als Kühlmittel kommt zum Beispiel Luft oder eine transparente, elektrisch isolierende Flüssigkeit, zum Beispiel deionisiertes Wasser in Frage.

Der Gegenhalter 11 besteht ebenfalls aus einem prismatischen Rotor 42 mit rechteckigem Querschnitt, auf dem ein Halterkörper 43 radial verschiebbar gelagert ist. Der Körper 43 ist durch eine Feder 44 gegen einen Anschlag vorbelastet. Die bombierte Gegenfläche 45 des Körpers 43 hat ebenfalls eine Abflachung 46 in der Mitte.

Im Betrieb arbeitet die Vorrichtung wie folgt: Die Einrichtung 10 und der Gegenhalter 11 drehen synchron gegenläufig. Zumindest, wenn die Flächen 37, 45 die beiden Folienlagen des Schlauches 15 zwischen sich pressen, ist die Umfangsgeschwindigkeit dieser Flächen annähernd gleich der Vorschubgeschwindigkeit des Schlauches 15. Der Drehwinkel der Rotoren 20, 42 ist mit dem Längsvorschub so synchronisiert, dass das Fenster 36 und der Körper 43 jeweils zwischen zwei Produkten 16 auf den Schlauch 15 auftreffen. Im Zeitpunkt, in welchem die Achsen 12, 13, 28 in einer gemeinsamen Ebene liegen, also die Abflachungen 38, 46 den Schlauch 15 pressen, wird die Lampe 29 gezündet. Durch ein gepulstes, elektrisches Feld zwischen den beiden Elektroden 30, 31 wird im Entladungsvolumen ein Gas durch Stossionisation zu einem elektrisch leitenden Plasma. Das Plasma erwärmt sich durch den elektrischen Strom. Die Lichtemmission besteht aus Schwarzkörperstrahlung mit einer Farbtemperatur von bis gegen 10'000 K, überlagert von charakteristischen spektralen Linien des ionisierten Gases. Dies entspricht einer breiten spektralen Emission von 160 bis 2'500 nm. Die Emission erfolgt von der Oberfläche des gezündeten Plasmas. Das Plasma ist lichtundurchlässig.

Durch die reflektierende Oberfläche 27 wird die von der Lampe 29 radial abgestrahlte Energie auf den zweiten Brennpunkt der Ellipse reflektiert. Dieser befindet sich annähernd an der Abflachung 38 des Fensters 36 bzw. um die einfache oder doppelte Dikke der Folie 18 des Schlauches 15 davon entfernt. Dadurch wird mehr als die Hälfte der abgestrahlten Energie der Lampe 29 an der Brennlinie an der Oberfläche, in der Mitte oder an der Unterseite des Schlauches 15 konzentriert, so dass an der Brennlinie eine Energiedichte von über 2 J/cm², bis maximal 30 J/cm², erreicht wird. Damit wird ein sehr hoher Wirkungsgrad erreicht. Je nach Dicke der Folie des Schlauches 15 sind Impulsdauern zwischen 50 µs und 10 ms erforderlich. Das gewünschte Spektrum der abgestrahlten Strahlung hängt von der Art der verwendeten Folie 18 ab, weil der Absorptionskoeffizient des Materials von der Wellenlänge abhängig ist. Das Strahlungsspektrum ist relativ breit, hat aber ein Maximum, das von der Stromstärke abhängt.

Bei 1000 A/cm² liegt das Maximum zum Beispiel im sichtbaren Spektralbereich und verschiebt sich bei Erhöhung auf 10'000 A/cm² zum ultravioletten Bereich.

Bei einer Vorschubgeschwindigkeit in Richtung A von 1 m/s, einem Umlaufradius der Fläche 38 von 8 cm und einer Blitzdauer von 0,1 ms ergibt sich beispielsweise ein Drehwinkel der Siegeleinrichtung 10 während der Dauer des Blitzes von bloss 3,5 Bogenminuten. Die Versiegelung erfolgt also ausserordentlich rasch und die Flächen 38, 45 sind noch hinreichend lang nach der Versiegelung aneinander gepresst, dass die Siegelnaht rasch abkühlt. Dadurch lassen sich sehr hohe Produktionsraten erzielen. Grosse Energiemengen können gezielt in der Siegelnaht deponiert werden. Die Pressbacken bleiben kalt und kühlen die versiegelte Naht sofort ab. Dickes transparentes Material kann auf beliebiges absorbierendes Material aufgeschweisst werden. Die Vorrichtung eignet sich auch für kontaktloses Siegeln ohne mechanischen Kontakt zwischen der Vorrichtung und den Folien 18.

Bei den nachfolgend beschriebenen Ausführungsbeispielen sind analoge Teile mit gleichen Bezugszeichen versehen, so dass sich eine detaillierte Beschreibung dieser Teile erübrigt.

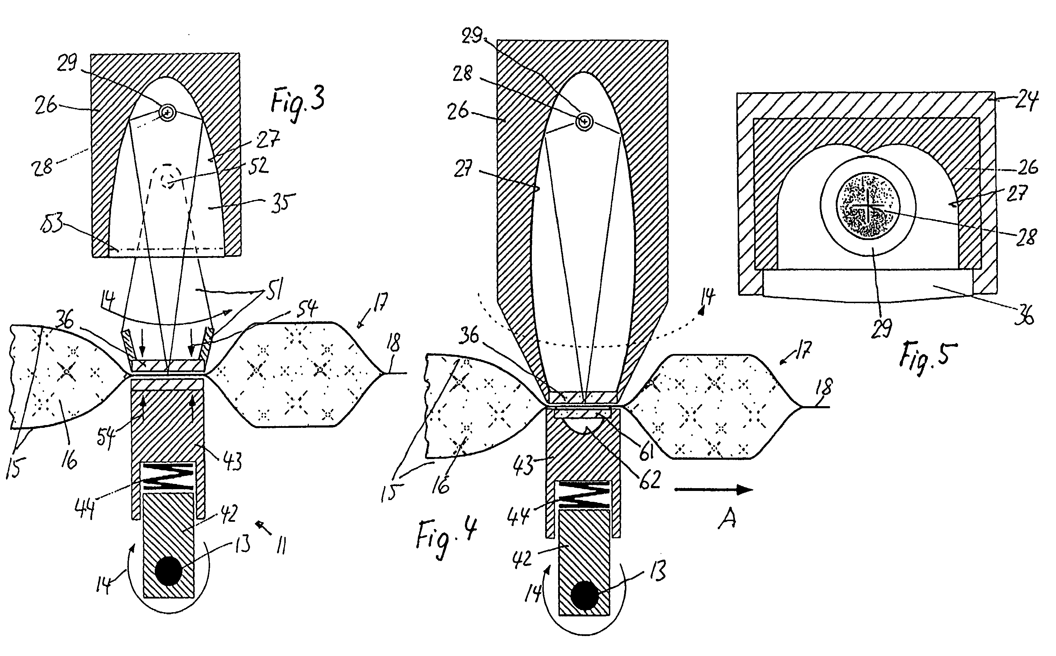

Die Ausführungsform nach Figur 3 unterscheidet sich hauptsächlich dadurch von jener nach Figuren 1 und 2, dass der Reflektor 26 und die Lampe 29 stationär sind und das Fenster 36 auf einem umlaufenden Träger 51 montiert ist. Der Träger 51 rotiert um eine zur Achse 28 parallele Achse 52, die in der gemeinsamen Ebene der Achsen 28, 13, liegt. Der Raum 35 kann durch ein weiteres Fenster 53 abgeschlossen sein, das in Figur 3 strichpunktiert gezeigt ist. Damit wird der Kühlkreislauf 39 ermöglicht. Diese Ausführungsform hat vor allem die Vorteile, dass die Lampe 29 weniger Erschütterungen ausgesetzt ist, und dass die Anschlüsse an den Generator 32 und an den Kühlkreislauf 39 einfacher sind.

Falls der Schlauch 15 schrittweise bewegt wird, können der Gegenhalter 11 und das Fenster 36 statt rotiert auch linear in Richtung der Pfeile 54 senkrecht zur Förderrichtung A in entsprechenden Führungen bewegt werden.

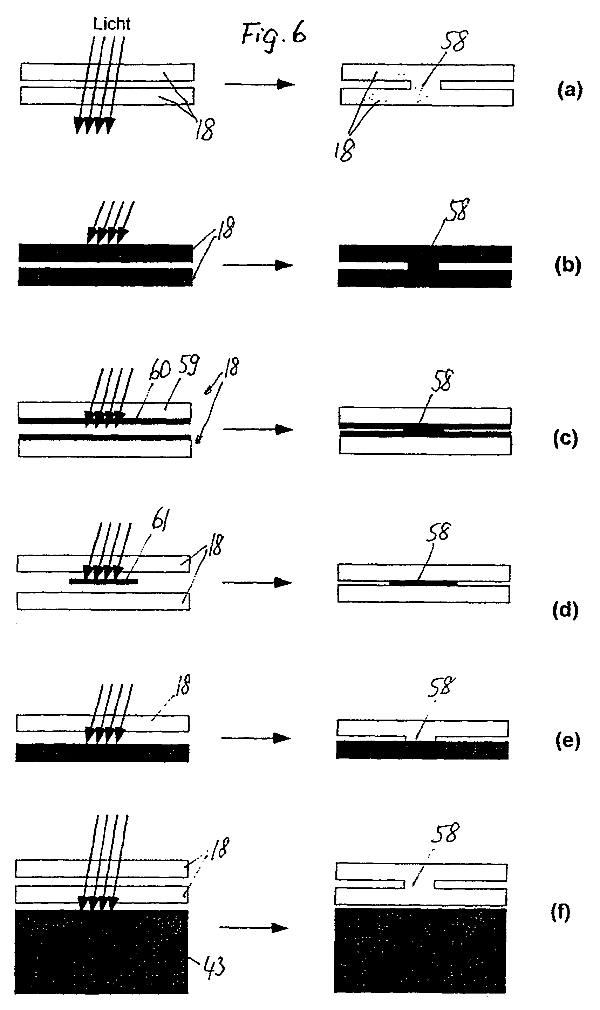

Die Vorrichtung nach Figur 4 unterscheidet sich von jener nach Figur 3 unter anderem dadurch, dass der Reflektor 26 mitrotiert, wobei die Blitzlampe 29 stationär ist. Der Halterkörper 43 hat ein transparentes Fenster 61 und eine reflektierende, elliptisch-zylindrische Fläche 62, deren Querschnitt die Oberfläche 27 des Reflektors 26 im Zündzeitpunkt zu einer nahezu vollständigen Ellipse ergänzt. Die Brennachse 28 des Reflektors 26 ist die Drehachse 12 des Reflektors 26. Der andere Brennpunkt 63 liegt in der Mitte der beiden zu verschweissenden Folien 18. Diese Ausführungsform eignet sich vor allem zum Versiegeln teiltransparenter Folien 18, weil das Licht, das von der Lampe 29 direkt auf das Fenster 36 abgestrahlt wird, durch die Oberfläche 62 ebenfalls auf die Brennlinie 63 konzentriert wird.

Figur 5 zeigt eine Variante der reflektierenden Oberfläche 27 des Reflektors 26, welche gemäss US-A-4 641 315 ausgebildet ist und deren Querschnitt als Involute bezeichnet wird. Diese Querschnittsform eignet sich vor allem im Nahbereich der Lampe 29 wegen der Abstrahlungscharakteristik der Lampe (undurchsichtiger Oberflächenemitter).

Die Vorrichtung kann auch so betrieben werden, dass durch einen ersten Blitz eine Siegelnaht gebildet und unmittelbar darauf durch einen zweiten, kürzeren aber intensiveren Blitz der Folienschlauch 15 längs der Mitte der gebildeten Siegelnaht getrennt wird.

Figur 6 zeigt Varianten der zu versiegelnden Folien 18. Diese sind in Figur 6a schwach absorbierend. Zu deren Versiegelung eignet sich vor allem die Vorrichtung nach Figur 4. Figur 6b zeigt das Versiegeln stark absorbierender Folien 18. In diesem Fall erfolgt die Wärmezufuhr zu der Siegelnaht 58 durch Wärmeleitung durch die obere Folie 18 hindurch. In der Variante nach Figur 6c ist mindestens eine der Folien 18 eine Verbundfolie mit einer äusseren, transparenten Schicht 59 und einer inneren, lichtabsorbierenden Schicht 60. Bei der Variante nach Figur 6d sind die Folien 18 transparent, und es wird ein zusätzlicher, lichtabsorbierender Streifen 61 eingesiegelt. Bei der Variante nach Figur 6e ist die der Lampe 29 zugewandte Folie 18 transparent und die andere Folie 18 lichtabsorbierend. Bei den Varianten nach Figuren 6c, 6d und 6e wird die Energie unmittelbar an der zu verschweissenden Stelle eingebracht. Dadurch ist der Siegelvorgang besonders rasch und effizient. Bei der Variante nach Figur 6f sind beide Folien 18 transparent, dafür der Halterkörper 43 bzw. dessen Oberfläche 45 lichtabsorbierend.

## Patentansprüche

1. Vorrichtung zum Versiegeln von Folien, insbesondere zum Versiegeln von Verpackungsfolien in einer Verpackungsmaschine, umfassend eine optische Energiequelle (29) mit länglicher Ausdehnung, einen Reflektor (26) zur Fokussierung des von der optischen Energiequelle (29) emittierten Lichtes, ein gegen die zu versiegelnden Folien bewegbares, transparentes Fenster (36) sowie einen gegen die Folien (18) bewegbaren Gegenhalter (11), gegen welchen das Fenster (36) anpressbar ist, **dadurch gekennzeichnet, dass** der Gegenhalter (11) eine transparente Gegenplatte (61) aufweist und auf der den Folien abgewandten Seite des Gegenhalters (11) ein Gegenreflektor (62) angeordnet ist, der im Zündzeitpunkt mit der Oberfläche (27) des Reflektors (26) eine optische geschlossene Form bildet, wobei die optische Energiequelle (29) im Zündzeitpunkt in einem ersten Brennpunkt (28) dieser Form angeordnet ist und die Folien (18) durch den zweiten Brennpunkt (63) verlaufen.

2. Vorrichtung nach Anspruch 1, wobei die optische Energiequelle (29) eine gepulste Lichtquelle hoher Intensität, insbesondere eine Gasentladungslampe, zum Beispiel eine Xenon-Blitzlampe ist.

3. Vorrichtung nach Anspruch 1 oder 2, wobei die reflektierende Oberfläche (17) des Reflektors (26) im Querschnitt elliptisch geformt ist und die optische Energiequelle (29) im einen Brennpunkt dieser Ellipse angeordnet ist und wobei der andere Brennpunkt im Zündzeitpunkt benachbart der den Folien (18) zugewandten Fläche des Fenster (36) ist.

4. Vorrichtung nach einem der Ansprüche 1 bis 3, wobei ein Raum (35) zwischen der optischen Energiequelle (29) und dem Reflektor (26) an einen Kühlmedienkreislauf (39) angeschlossen ist und wobei das Kühlmedium transparent ist.

5. Vorrichtung nach einem der Ansprüche 1 bis 4, wobei der Reflektor (26) mit dem Fenster (36) um die Achse (28) der optischen Energiequelle (29) und der Gegenhalter (11) um eine zweite Achse (13) synchron gegenläufig drehbar gelagert sind, und wobei die optische Energiequelle (29) vorzugsweise stationär angeordnet ist.

6. Vorrichtung nach einem der Ansprüche 1 bis 4, wobei der Reflektor (26) und die optische Energiequelle (29) stationär angeordnet sind und das Fenster (36) beweglich angeordnet ist.

7. Vorrichtung nach Anspruch 6, wobei das Fenster (36) auf einem Träger (51) montiert ist, der um eine zur Achse (28) der optischen Energiequelle (29) parallele Achse (52) drehbar gelagert ist.

8. Vorrichtung nach einem der Ansprüche 1 bis 7, wobei das Fenster (36) aus einem kratzfesten, transparenten Material besteht, insbesondere aus Saphirglas.

9. Verwendung der Siegelvorrichtung nach einem der Ansprüche 1 bis 8 in einer Verpackungsmaschine, insbesondere in einer Schlauchbeutelverpackungsmaschine.

## Claims

1. Film sealing apparatus, in particular for sealing packing films in a packing machine, comprising an elongated optical energy source (29), a reflector (26) for focusing the light emitted by the optical energy source (29), a transparent window (36) which can be moved towards the films to be sealed, and a countershoe (11) which can be moved against the films (18) and against which the window (36) can be pressed, **characterized in that** the countershoe (11) has a transparent counterplate (61), and there is arranged on the side of the countershoe (11) averted from the films a counter-reflector (62) which forms an optically closed shape with the surface (27) of the reflector (26) at the firing instant, the optical energy source (29) being arranged at the firing instant at a first focal point (28) of this shape and the films (18) running through the second focal point (63).

2. Apparatus according to Claim 1, in which the optical energy source (29) is a high-intensity fast light source, in particular a gas discharge lamp, for example a xenon flash lamp.

3. Apparatus according to Claim 1 or 2, in which the reflecting surface (17) of the reflector (26) is elliptically shaped in cross section and the optical energy source (29) is arranged at a focal point of this ellipse, the other focal point being adjacent at the firing instant to the surface of the window (36) facing the films (18).

4. Apparatus according to one of Claims 1 to 3, in which a space (35) between the optical energy source (29) and the reflector (26) is connected to a coolant circuit (39), the coolant being transparent.

5. Apparatus according to one of Claims 1 to 4, in which the reflector (26) is mounted with the window (36) such that they can rotate about the axis (28) of the optical energy source (29), and the countershoe (11) is mounted such that it can rotate synchronously therewith and opposite thereto about a second axis (13), and in which the optical energy source (29) is preferably arranged in a stationary fashion.

6. Apparatus according to one of Claims 1 to 4, in which the reflector (26) and the optical energy source (29) are arranged in a stationary fashion and the window (36) is movably arranged.

7. Apparatus according to Claim 6, in which the window (36) is mounted on a carrier (51) which is mounted such that it can rotate about an axis (52) parallel to the axis (28) of the optical energy source (29).

8. Apparatus according to one of Claims 1 to 7, in which the window (36) consists of a scratch-proof, transparent material, in particular of sapphire glass.

9. Use of the sealing apparatus according to one of Claims 1 to 8 in a packing machine, in particular in a tubular bag packing machine.

## Revendications

1. Dispositif pour sceller des films, notamment pour sceller des films d'emballage dans une machine d'emballage, comprenant une source d'énergie optique (29) à extension longitudinale, un réflecteur (26) pour concentrer la lumière émise par la source d'énergie optique (29), une fenêtre transparente (36) pouvant être déplacée contre les films à sceller ainsi qu'un butoir (11) pouvant être déplacé contre les films (18) et contre lequel peut être comprimée la fenêtre (36), **caractérisé en ce que** le butoir (11) présente une contre-plaque transparente (61) et un contre-réflecteur (62) est disposé sur le côté du butoir (11) qui se trouve à l'opposé des films, lequel forme une forme optique fermée avec la surface (27) du réflecteur (26) au moment de l'inflammation, la source d'énergie optique (29) étant disposée dans un premier foyer (28) de cette forme au moment de l'inflammation et les films (18) passant par le deuxième foyer (63).

2. Dispositif selon la revendication 1, avec lequel la source d'énergie optique (29) est une source de lumière pulsée de forte intensité, notamment une lampe à décharge gazeuse, par exemple une lampe à éclairs au xénon.

3. Dispositif selon la revendication 1 ou 2, avec lequel la surface réfléchissante (17) du réflecteur (26) présente, en coupe transversale, une forme elliptique et la source d'énergie optique (29) est disposée en un foyer de cette ellipse et avec lequel l'autre foyer, au moment de l'inflammation, est voisin de la surface de la fenêtre (36) qui est dirigée vers les films (18).

4. Dispositif selon l'une des revendications 1 à 3, avec lequel un espace (35) entre la source d'énergie optique (29) et le réflecteur (26) est raccordé à un circuit de liquide de refroidissement (39) et avec lequel le liquide de refroidissement est transparent.

5. Dispositif selon l'une des revendications 1 à 4, avec lequel le réflecteur (26) avec la fenêtre (36) est logé de manière à pouvoir tourner autour de l'axe (28) de la source d'énergie optique (29) et le butoir (11) autour d'un deuxième axe (13) de manière synchrone et en sens inverse et avec lequel la source d'énergie optique (29) est de préférence fixe.

6. Dispositif selon l'une des revendications 1 à 4, avec lequel le réflecteur (26) et la source d'énergie optique (29) sont fixes et la fenêtre (36) est mobile.

7. Dispositif selon la revendication 6, avec lequel la fenêtre (36) est montée sur un support (51) qui est logé de manière à pouvoir tourner autour d'un axe (52) parallèle à l'axe (28) de la source d'énergie optique (29).

8. Dispositif selon l'une des revendications 1 à 7, avec lequel la fenêtre (36) se compose d'un matériau transparent résistant aux rayures, notamment du verre de saphir.

9. Application du dispositif de scellement selon l'une des revendications 1 à 8 dans une machine d'emballage, notamment dans une machine d'emballage en sachet.
